# EUROPEAN PATENT SPECIFICATION

(11) **EP 0 606 230 B1**
(45) Date of publication and mention of the grant of the patent: **17.07.1996**
(21) Application number: 92917633.7
(22) Date of filing: 12.08.1992
(51) Int. Cl.: A01G 23/095

(54) **FELLING GRAPPLE FOR A MULTI-FUNCTION TREE HARVESTER**
GREIFER ZUM FÄLLEN FÜR EINE MULTIFUNKTIONSBAUMERNTEMASCHINE
GRAPPIN D'ABATTAGE POUR MACHINE A ARRACHER LES ARBRES MULTI-FONCTION

(30) Priority: 27.08.1991 FI 915323
(43) Date of publication of application: 20.07.1994
(73) Proprietor: MOISIO, Juha, SF-44670 Suovanlahti (FI)
(72) Inventor: MOISIO, Juha, SF-44670 Suovanlahti (FI); MOISIO, Jouko, SF-44500 Viitasaari (FI)
(74) Representative: Feldmann, Clarence Paul
(86) International application number: FI9200227
(87) International publication number: WO9303604

(56) References cited:
- EP-A- 0 323 364
- SE-B- 343 391
- SE-B- 353 958
- SE-B- 421 453
- SE-B- 463 907
- US-A- 3 542 099
- US-A- 4 922 976
- US-A- 4 974 648

## Description

The operation of the delimbing cutters of current felling, delimbing and cutting grapples have presented many difficulties. The compressive force applied to the cutters has usually varied directly with the magnitude of the load. Thus the high driving power required at the feed rollers to process large branches increases the pressure of the delimbing cutters against the trunk of the tree, creating a tendency for the delimbing cutters to choke. If the adjustment of the delimbing cutters is made independent of the pressure regulation of the feed rollers, the delimbing cutters then constantly demand an active control during operation of the harvester. Both conditions make it difficult to achieve a flexible processing of a tree. At the same time, the power demands of the feller grapple increases tremendously, which in turn necessitates more power and weight at the hydraulic motors of the grapple and more strength and weight at the grapple.

Due to its location at the end of a long hydraulically articulated boom, the weight of a feller grapple forms one of the determinant factors for the operativity of a multi-function tree harvester.

Forest thinning requires a high operating speed from a tree harvester with respect to each felled tree. Thus the capability to process more than one tree at the same time becomes an important factor.

The characteristics of the invention are described in the claims.

Illustrations 1, 2 and 3 depict one application of this invention so that the working parts are drawn with full lines and the structural parts with broken lines. In Illustration 1, the feller grapple is represented perpendicular to the direction of travel of the tree, in Illustration 2 the feller grapple is shown in side view with the direction of travel of the tree parallel to the illustration plane, while in Illustration 3 the grapple is shown in top view above the direction of travel of the tree.

Illustration 1 shows the rubberised feed rollers at the sides of the grapple, which are used to move the trunk. They are provided with a suitable friction surface and are driven by hydraulic power. The feed rollers 1 are mounted to supporting arms 10 and 11, which open and close around a hinge pin 9 by means of a double-acting hydraulic actuator 12 mounted on hinge pins 7a and 7b.
The support arms 10 and 11 also carry the lower delimbing cutters 2a and 2b, which are mounted on the arms through the bearing hinges 6a and 6b and which are controlled by the double-acting hydraulic actuators 13a and 13b. The fully closed position of the lower delimbing cutters 2a and 2b (as well as the of the cutters 2c and 2d hidden by this projection) is set by the hydraulic actuators 16a and 16b. These actuators prevent the lower delimbing cutters from choking on the trunk during the delimbing process. The upper delimbing cutter 3a forms part of the support arm 11, and it is paired with the upper delimbing cutter 3b, rotating on the bearing hinge 6b and guided by means of part 4. The upper delimbing cutters 3a and 3b are suitably sharpened at their leading edges, and the upper delimbing cutter 3a is provided with a support roller 5 to prevent choking, while the upper delimbing cutter 3b is fitted with a combined support and length measuring roller 6. The feller grapple is supported by a tilting yoke 7 and a rotating support 8 at the end of the harvester boom.

Illustration 2 provides a lateral view of the feller grapple. The tilting yoke 7 is joined by part 14a to the feller grapple body 10 through the pin 7a. The joining part 14a includes a double-acting hydraulic actuator 12a which rotates the feller grapple from a delimbing and cutting position to a felling position and back. The hydraulically powered cutting saw is located in a protective casing 15. The cutting saw may be operated manually by the harvester driver or semi-automatically as programmed through the length measuring roller (Illustration 1, part 6) and the thickness measurement sensor (Illustration 3, part 15). The double-acting hydraulic actuator 13a drives the lower delimbing cutter 2a and the double-acting hydraulic actuator 13c the lower delimbing cutter 2c.

Illustration 3 gives a top view of the feller grapple with the tilting yoke 7 removed. The thickness of the trunk is determined by the sensor 15 measuring the angular variation between the supporting arms 10 and 11 rotating about the hinge pin 9.

The design shown in Illustrations 1, 2 and 3 gives flexibility to the feller grapple. It may be used both for heavy cuttings as well as thinning operations. The design has exceptionally low energy requirements in delimbing. The rollers 5 and 6 rotating on antifriction bearings prevent the delimbing cutters 3a and 3b from cutting into the trunk during a delimbing operation. The position above the body of the tree being delimbed of the lower delimbing cutters 2a, 2b, 2c and 2d, held through pins 6a and 6b to the scissors-like support arms 10 and 11, is controlled from the feed rollers 1 by means of the double-acting hydraulic actuators 13a, 13b, 13c and 13d and the back stop actuators 16a, 16b, 16c and 16d. This design allows the application of a strong driving pressure by the feed rollers 1 on the tree being delimbed while simultaneously preventing the delimbing cutters from gripping the trunk by keeping them suitably distant from the trunk surface during the delimbing operation. Furthermore it lets the lower delimbing cutters strongly grip the trunk during the felling of large trees and under other special circumstances, only to let the pressure be released and transferred to the feed rollers 1 during the delimbing operation. This grapple design also simplifies cutting operations in that, when cutting trees of similar dimensions, the gripping operation need be regulated only through the actuator 12. Since the lower delimbing cutters are flexibly mounted on bearings on the support arms 10 and 11 and are provided with separate controls, they enable the grapple to process simultaneously several small trees. This may be achieved by keeping a felled tree in the grapple by means of the feed rollers 1 as the grapple remains in a vertical position, while gripping the next tree with the lower delimbing cutters during the cutting operation, after which the lower delimbing cutters force the tree into the grasp of the feed rollers 1, and so on. Afterwards the cluster of trees can be delimbed as a whole. The possibility also exists to gather felled trees into the grapple using the same principle and then to delimb several trees at once. This method of operation presents important advantages, since the multi-function tree harvester is spared several work stages, while thinning cuts can be exploited more efficiently and costs are lowered.

The measurement of thickness in this design is carried out by measuring the angle defined by the support arms 10 and 11, the distance between the feed rollers being obtained through calibration. Since the delimbing cutters, supported by the feed rollers, are kept distant from the tree, the measurement becomes much more accurate than through a measurement by means of the delimbing cutters. The result is a more reliable thickness value.

The compressive force developed on the feed rollers 1 held through the support arms 10 and 11 remains a separate entity, affecting solely the feed rollers 1. In distinction from conventional designs, the delimbing stresses as well as the acceleration and deceleration stresses are transmitted across the hinges 6a and 6b to the support arms 10 and 11 at a location close to the feed rollers 1. Thus the torque created by these forces acts across a much shorter leverage arm and the support arms 10 and 11, as well as the grapple as a whole, may be conceived to a much lighter design.

Since the grapple in its entirety is located at the end of a long boom, even small reductions in total mass can be employed to maximise efficiency, either by reducing the total weight of the multi-function tree harvester or by increasing the reach of existing machines.

This design offers further advantages over conventional designs in thinning cuts and under circumstances where small trees are processed. Through this invention, trees either previously felled or broken by storms may be easily picked by bringing the support arms 10 and 11 close together and opening the lower delimbing cutters to a suitable compressing position, whereby gripping will succeed even on difficult terrain.

This invention may be built in several ways using known components. The feed rollers may be replaced by driving wheels, the material may be high-strength steel in either sheet or other form. Several components could be justifiably built of high-strength aluminium or from some other known material. The grapple uses known technology to provide motion and perform measurements and it is mounted in a known fashion to the multi-function tree harvester.

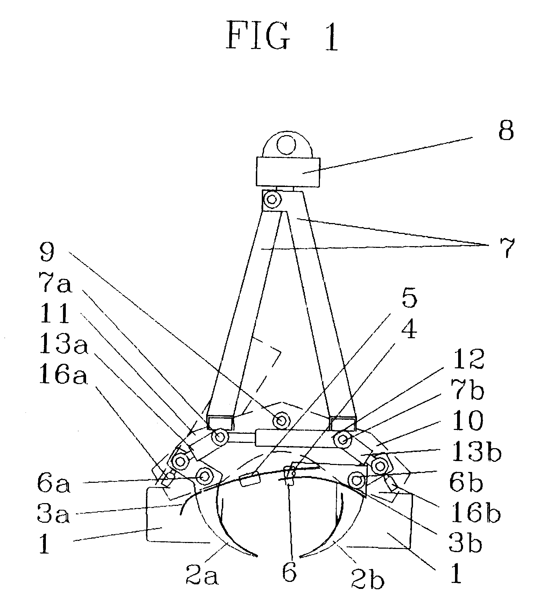

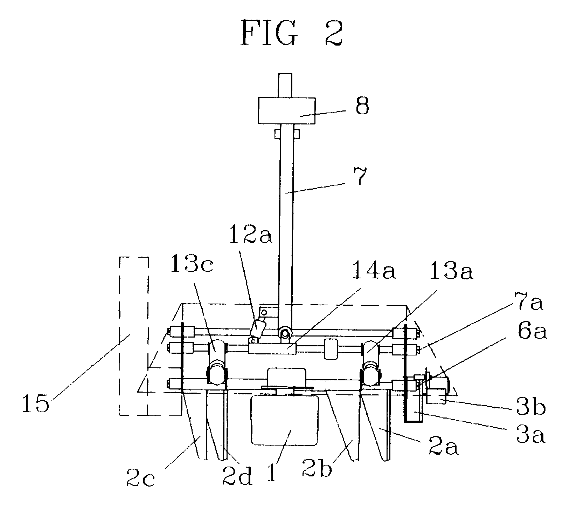

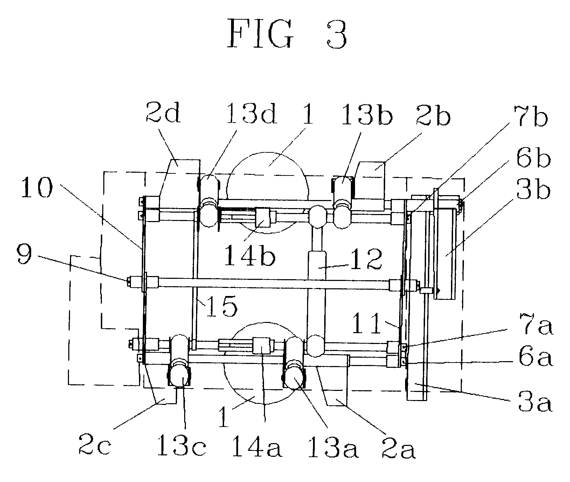

## Claims

1. A felling, delimbing and cutting grapple for a multi-function tree harvester, characterised in that:
- an upper first delimbing cutter (3a) is fixedly mounted to a first scissors-like support arm (11) and a second upper delimbing cutter (3b) is mounted through a hinge (6b) to a second support arm (10), the hinged delimbing cutter (3b) being guided from the upper first delimbing cutter (3a) by means of piece (4);
- support rollers (5,6) have been built on the upper delimbing cutters (3a,3b) to prevent the cutters from cutting and gripping the trunk of a tree during a delimbing operation
- one support roller acts as length measurement device;
- feed rollers (1) or alternatively drive wheels are mounted on the support arms (10,11), which are joined through the hinge (9) such that the force exerted by a first hydraulic actuator (12) to bring together the support arms (10,11) causes the feed rollers (1) to compress the tree being processed, whereby a measurement by means of a sensor (15) of the angle defined by the support arms (10,11) will produce a determination of the diameter of the tree;
- lower delimbing cutters (2a,2b), separately hinged to the support arms (10,11) through hinge pins (6a,6b), controlled through second hydraulic actuators (13a,13b,13c,13d), set in position through third hydraulic actuators (16a,16b,16c,16d), can be held at a distance from the trunk being fed by means of the feed rollers (1) to the delimbing process;
- several tree trunks may be guided by means of the lower delimbing cutters (2a,2b) between the feed rollers (1) and pressed therein in order to allow processing of several trees in a single operation.

## Patentansprüche

1. Mehrzweck-Baum-Erntemaschine, welche die Aeste eines Baumes abschneidet und den Baum fällt, gekennzeichnet durch einen ersten oberen Astabschneider (3a), der fest am ersten scherenartigen Trägerarm (11) gehalten ist und einen zweiten oberen Astabschneider (3b), der mittels eines Gelenkes (6b) mit einem zweiten Trägerarm (10) verbunden ist, wobei der gelenkig befestigte Astabschneider (3b) mittels eines Teiles (4) des ersten Astabschneiders (3a) gelenkt wird; ferner durch Stützrollen (5,6), welche an den oberen Astabschneidern (3a,3b) montiert sind und verhindern, dass diese während des Astabschneidens in den Stamm des Baumes einschneiden, wobei eine Stützrolle als Messrolle ausgebildet ist, ferner durch Vorschubrollen (1) oder gegebenenfalls Antriebsräder, welche an den Trägerarmen (10,11) befestigt sind, welche durch ein Gelenk (9) miteinander verbunden sind, derart, dass ein erstes hydraulisches Antriebselement (12) die Trägerarme (10,11) einander nähert und die Vorschubrollen (1) an den Stamm des behandelten Baumes drückt, wobei ein Sensor (15) den Winkel zwischen den Trägerarmen (10,11) misst und den Durchmesser des Baumstammes anzeigt; ferner durch untere Astabschneider (2a,2b), welche separat mit den Trägerarmen (10,11) mittels Zapfen (6a,6b) verbunden sind und mittels zweiten hydraulischen Antriebselementen (13a,13b,13c,13d) gesteuert werden, während dritte hydraulische Antriebselemente (16a,16b,16c,16d) sie im Abstand vom Baumstamm halten, der von den Vorschubrollen (1) während des Astabschneidens vorgeschoben wird; ferner dadurch gekennzeichnet, dass mehrere Baumstämme den unteren Astabschneidern (2a,2b) zugeführt und von diesen gehalten werden können, derart, dass mehrere Baumstämme in einem Arbeitsgang behandelt werden können.

## Revendications

1. Grappin d'abattage, d'élagage et de coupe pour machine à arracher les arbres à fonctions multiples, caractérisé en ce que:
- un premier outil d'élagage supérieur (3a) est monté de manière rigide sur un premier bras de support (11) analogue à des ciseaux et un second outil d'élagage supérieur (3b) est monté par l'intermédiaire d'une articulation (6b) sur un second bras de support (10), l'outil d'élagage fixé avec articulation (3b) étant guidé par le premier outil d'élagage supérieur (3a) au moyen d'une pièce (4);
- des rouleaux de support (5,6) ont été agencés sur les outils d'élagage supérieurs (3a,3b) pour empêcher que les outils coupent et serrent les troncs d'arbre pendant une opération d'élagage;
- un rouleau de support agit comme dispositif de mesure de longueur;
- des rouleaux d'alimentation (1) ou en variante des roues d'entraînement sont montés sur les bras de support (10,11), qui sont reliés par l'intermédiaire de l'articulation (9) de telle sorte que la force exercée par un premier vérin hydraulique (12) pour amener ensemble les bras de support (10,11) fasse comprimer par les rouleaux d'alimentation (1) le tronc à traiter, tandis qu'une mesure faite au moyen d'un capteur (15) de l'angle défini par les bras de support (10,11) donne une détermination du diamètre de l'arbre;
- des outils d'élagage inférieurs (2a,2b), montés séparément avec articulation sur les bras de support (10,11) à l'aide de broches d'articulation (6a,6b), entraînés par les seconds vérins hydrauliques (13a,13b,13c,13d), ayant leur position ajustée à l'aide de troisièmes vérins hydrauliques (16a,16b,16c,16d), peuvent être maintenus à une certaine distance du tronc chargé au moyen des rouleaux d'alimentation (1) pour mise en oeuvre de l'opération d'élagage;
- plusieurs troncs d'arbre peuvent être guidés à l'aide des outils d'élagage inférieurs (2a,2b) entre les rouleaux d'alimentation (1) et presses dans ceux-ci afin de permettre le traitement de plusieurs arbres en une seule opération.
